# EUROPÄISCHE PATENTSCHRIFT

(11) **EP 3 623 266 B1**
(45) Veröffentlichungstag und Bekanntmachung des Hinweises auf die Patenterteilung: **25.11.2020**
(21) Anmeldenummer: 19194820.7
(22) Anmeldetag: 02.09.2019
(51) Int. Cl.: B62D 51/00, B62D 51/04, B62D 51/02, B66F 9/075

(54) **VERFAHREN ZUM BETRIEB EINES FLURFÖRDERZEUGS**
METHOD FOR OPERATING AN INDUSTRIAL TRUCK
PROCÉDÉ DE FONCTIONNEMENT D'UN CHARIOT DE MANUTENTION

(30) Priorität: 06.09.2018 DE 102018121759; 22.10.2018 DE 102018126194
(43) Veröffentlichungstag der Anmeldung: 18.03.2020
(73) Patentinhaber: STILL S.p.A., 20020 Lainate (MI) (IT)
(72) Erfinder: IORI, Michele, 42047 Rolo - Reggio Emilia (IT)
(74) Vertreter: Patentship Patentanwaltsgesellschaft mbH

(56) Entgegenhaltungen:
- EP-A1- 0 538 697
- EP-A1- 1 398 251
- US-A- 4 716 980
- US-A1- 2014 343 758
- US-A1- 2018 009 643

## Beschreibung

Die Erfindung betrifft ein Verfahren zum Betrieb eines Flurförderzeugs mit einem Fahrantrieb, mit einem Fahrerarbeitsplatz, der von einer Fahrerstandplattform für eine stehende Bedienperson gebildet ist, und mit einer Lenkereinrichtung, an der mindestens ein Fahrgeber angeordnet ist, bei dessen Betätigung durch die Bedienperson der Fahrantrieb betätigt wird, wobei der Fahrgeber eine erste Bewegungsmöglichkeit für eine Vorwärtsfahrt des Flurförderzeugs, eine zweite Bewegungsmöglichkeit für eine Rückwärtsfahrt des Flurförderzeugs und eine Neutralstellung aufweist.

Derartige Flurförderzeuge, wie bspw. aus US 4 716 980 A bekannt, werden normalerweise in einem Mitfahrerbetrieb betrieben, in dem sich die Bedienperson auf der Fahrerstandplattform aufwiest. Eine Sensoreinrichtung, die das Vorhandensein der Bedienperson auf der Fahrerstandplattform erfasst, gibt dann, wenn das Vorhandensein der Bedienperson auf der Fahrerstandplattform erfasst wird, den Fahrantrieb des Flurförderzeugs frei, so dass die auf der Fahrerstandplattform befindliche Bedienperson durch eine Betätigung des Fahrgebers in einer der Bewegungsmöglichkeiten den Fahrantrieb ansteuern und das Flurförderzeug in Vorwärtsfahrtrichtung bzw. Rückwärtsfahrtrichtung fahren kann.

Derartige Flurförderzeuge werden auch im Kommissionierbetrieb eingesetzt, bei dem die Bedienperson Waren aus einem Lagerort entnimmt und auf einen Lastteil des Flurförderzeugs ablegt. Sofern zwischen den Lagerorten nur kurze Wegstrecken liegen, besteht das Bedürfnis, dass die Bedienperson den Fahrantrieb des Flurförderzeugs auch dann betätigen und ansteuern kann, wenn sie nicht zurück auf die Fahrerstandplattform steigen muss, sondern in einem Mitgängerbetrieb neben dem Flurförderzeug herlaufen kann.

Der vorliegenden Erfindung liegt die Aufgabe zugrunde, ein Verfahren der eingangs genannten Gattung zur Verfügung zu stellen, bei dem ein sicherer und einfacher Betrieb des Fahrantriebs des Flurförderzeugs ermöglicht wird, wenn sich die Bedienperson nicht auf der Fahrerstandplattform befindet.

Diese Aufgabe wird erfindungsgemäß dadurch gelöst, dass in einem Betriebszustand, in dem sich die Bedienperson nicht auf der Fahrerstandplattform befindet, der Fahrantrieb mittels des Fahrgebers nur dann betätigt wird, wenn innerhalb eines vorgegebenen Zeitraums mindestens zwei Betätigungen des Fahrgebers in eine der Bewegungsmöglichkeiten durchgeführt werden.

Hierdurch wird ein einfacher und sicherer Mitgängerbetrieb des Flurförderzeugs ermöglicht. Sofern ein Betriebszustand vorliegt, in dem sich die Bedienperson nicht auf der Fahrerstandplattform befindet, kann erfindungsgemäß ein Mitgängerbetrieb des Flurförderzeugs mit einer Betätigung des Fahrantriebs durch den Fahrgeber erfolgen, wenn von der Bedienperson innerhalb eines vorgegebenen Zeitraums mindestens zwei Betätigungen des Fahrgebers in eine der Bewegungsmöglichkeiten durchgeführt werden. Hierbei stellt die erste Betätigung des Fahrgebers eine Freigabebetätigung des Fahrgebers bzw. des Fahrantriebs dar, in dem noch keine Betätigung des Fahrantriebs erfolgt, und mit der zeitlich anschließenden zweiten Betätigung des Fahrgebers kann von der Bedienperson der Fahrantrieb in der gewünschten Weise angesteuert und betätigt werden. Mit einer derartigen zweimaligen Betätigung des Fahrgebers kann von einer nicht auf der Fahrerstandplattform befindlichen und beispielsweise neben dem Flurförderzeug stehenden bzw. laufenden Bedienperson in einfacher und intuitiver Weise der Fahrantrieb des Flurförderzeugs angesteuert werden, um einen Mitgängerbetrieb des Flurförderzeugs zu ermöglichen. Auch muss für die Freigabe des Fahrgebers bzw. Fahrantriebs im Mitgängerbetrieb des Flurförderzeugs von der Bedienperson kein zusätzliches und separates Bedienelement betätigt werden, so dass ein umständliches und als hinderlich empfundenes Umgreifen von dem Bedienelement zu dem Fahrgeber entfällt, sondern die Bedienperson kann bei dem erfindungsgemäßen Verfahren in ergonomisch günstiger Weise mit der Doppelbetätigung des Fahrgebers, in der Art eines Doppelklicks, die Freigabe durchführen und den Fahranrieb ansteuern.

Gemäß einer vorteilhaften Ausführungsform der Erfindung müssen die zwei Betätigungen des Fahrgebers in derselben Bewegungsmöglichkeit durchgeführt werden. Will beispielsweise die nicht auf der Fahrerstandplattform befindliche Bedienperson das Flurförderzeug in Vorwärtsfahrtrichtung fahren, müssen die beiden Betätigungen des Fahrgebers jeweils in die erste Bewegungsmöglichkeit für die Vorwärtsfahrt des Flurförderzeugs erfolgen. Will beispielsweise die nicht auf der Fahrerstandplattform befindliche Bedienperson das Flurförderzeug in Rückwärtsfahrtrichtung fahren, müssen die beiden Betätigungen des Fahrgebers jeweils in die zweite Bewegungsmöglichkeit für die Rückwärtsfahrt des Flurförderzeugs erfolgen. Hierdurch wird eine hohe Sicherheit vor Fehlbedienungen erzielt und gleichzeitig eine intuitive Bedienung des Fahrgebers erzielt, um im Mitgängerbetrieb den Fahrantrieb mit dem Fahrgeber betätigen zu können.

Bevorzugt muss gemäß einer vorteilhaften Ausführungsform der Erfindung nach der ersten Betätigung des Fahrgeber eine Rückkehr in die Neutralstellung erfolgen. Zwischen den beiden Betätigungen des Fahrgebers muss somit der Fahrgeber wieder in die Neutralstellung betätigt werden. Hierdurch wird die Gefahr von Fehlbedienungen weiter verringert, da die Bedienperson nach der ersten Betätigung des Fahrgebers diesen wieder in die Neutralstellung zurückbewegen muss, um mit der anschließenden zweiten Betätigung des Fahrgebers den Fahrantrieb des Flurförderzeugs ansteuern zu können.

Der vorgegebene Zeitraum umfasst bevorzugt eine Zeitspanne im Bereich von 0,1 bis 3 Sekunden, bevorzugt 0,5 bis 2 Sekunden. Bei einer derartigen Begrenzung des vorgegebenen Zeitraums, innerhalb dessen die Freigabebetätigung zeitlich vor der entsprechenden Betätigung der Fahrgebers erfolgen muss, kann ein sicherer Betrieb des Fahrantriebs erzielt und sichergestellt werden.

Besondere Vorteile ergeben sich, wenn gemäß einer Weiterbildung der Erfindung in dem Betriebszustand, in dem sich die Bedienperson nicht auf der Fahrerstandplattform befindet, die maximale Fahrgeschwindigkeit des Flurförderzeugs gegenüber einem Mitfahrerbetrieb, in dem sich die Bedienperson auf der Fahrerstandplattform befindet, reduziert wird. In dem Betriebszustand, in dem sich die Bedienperson nicht auf der Fahrerstandplattform befindet, und somit im Mitgängerbetrieb des Flurförderzeugs wird die maximale Fahrgeschwindigkeit gegenüber einem Mitfahrerbetrieb, in dem sich die Bedienperson auf der Fahrerstandplattform befindet, reduziert. Dadurch wird es möglich, die maximale Fahrgeschwindigkeit des Flurförderzeugs im Mitgängerbetrieb auf die Gehgeschwindigkeit der neben dem Flurförderzug herlaufenden Bedienperson zu begrenzen, beispielsweise auf eine maximale Fahrgeschwindigkeit von 4-6 km/h. Im Mitfahrerbetrieb kann die maximale Fahrgeschwindigkeit des Flurförderzeugs bei bis zu 14km/h liegen. Die Begrenzung der maximalen Fahrgeschwindigkeit im Mitgängerbetrieb führt zu einer hohen Betriebssicherheit des Flurförderzeugs.

Besondere Vorteile ergeben sich, wenn gemäß einer Weiterbildung der Erfindung in dem Betriebszustand, in dem sich die Bedienperson nicht auf der Fahrerstandplattform befindet, der maximale Lenkwinkel des Flurförderzeugs gegenüber einem Mitfahrerbetrieb, in dem sich die Bedienperson auf der Fahrerstandplattform befindet, reduziert wird, insbesondere auf Lenkwinkel von +10° und -10° reduziert wird. In dem Betriebszustand, in dem sich die Bedienperson nicht auf der Fahrerstandplattform befindet, und somit im Mitgängerbetrieb des Flurförderzeugs wird der maximale Lenkwinkel gegenüber einem Mitfahrerbetrieb, in dem sich die Bedienperson auf der Fahrerstandplattform befindet, reduziert. Dadurch wird es möglich, den maximale Lenkwinkel des Flurförderzeugs im Mitgängerbetrieb derart zu beschränken, dass die neben dem Flurförderzug herlaufenden Bedienperson nicht gefährdet wird, beispielsweise auf einen maximalen Lenkwinkel von +/- 10°. Im Mitfahrerbetrieb liegt der maximale Lenkwinkel deutlich höher, um eine hohe Wendigkeit des Flurförderzeugs zu erzielen. Die Begrenzung des maximalen Lenkwinkels im Mitgängerbetrieb führt zu einer hohen Betriebssicherheit des Flurförderzeugs.

Gemäß einer vorteilhaften Ausführungsform der Erfindung wird der Betriebszustand, in dem sich die Bedienperson nicht auf der Fahrerstandplattform befindet, von einer Sensoreinrichtung erfasst, insbesondere einer das Vorhandensein oder Nichtvorhandensein der Bedienperson auf der Fahrerstandplattform erfassenden Sensoreinrichtung. Mit einer Sensoreinrichtung, die das Vorhandensein der Bedienperson auf der Fahrerstandplattform erfasst, kann auf einfache Weise auch erkannt werden, wenn sich die Bedienperson nicht auf der Fahrerstandplattform befindet und ein entsprechender Betriebszustand erfasst werden, in dem das Flurförderzeug auf den Mitgängerbetrieb umgeschaltet wird, in dem der Fahrantrieb nur angesteuert wird, wenn von der Bedienperson innerhalb eines vorgegebenen Zeitraums mindestens zwei Betätigungen des Fahrgebers in eine der Bewegungsmöglichkeiten durchgeführt werden und somit an dem Fahrgeber die Freigabebetätigung erfolgt.

Vorteilhafterweise wird der Betriebszustand, in dem sich die Bedienperson nicht auf der Fahrerstandplattform befindet, durch eine Signaleinrichtung angezeigt, insbesondere einer an der Lenkereinrichtung angeordneten Signallampe. Der Mitgängerbetrieb und das entsprechende Umschalten des Flurförderzeugs auf den Mitgängerbetrieb kann somit der Bedienperson auf einfache Weise angezeigt werden.

Die Erfindung betrifft weiterhin ein Flurförderzeug, mit einem Fahrantrieb, mit einem Fahrerarbeitsplatz, der von einer Fahrerstandplattform für eine stehende Bedienperson gebildet ist, und mit einer Lenkereinrichtung, an der mindestens ein Fahrgeber angeordnet ist, bei dessen Betätigung durch die Bedienperson der Fahrantrieb betätigbar ist, wobei der Fahrgeber eine erste Bewegungsmöglichkeit für eine Vorwärtsfahrt des Flurförderzeugs, eine zweite Bewegungsmöglichkeit für eine Rückwärtsfahrt des Flurförderzeugs und eine Neutralstellung aufweist. Die oben genannte Aufgabe wird bei einem derartigen Flurförderzeug dadurch gelöst, dass eine elektronische Steuereinrichtung vorgesehen ist, die mit dem Fahrgeber, mit dem Fahrantrieb und mit einer das Vorhandensein oder Nichtvorhandensein der Bedienperson auf der Fahrerstandplattform erfassenden Sensoreinrichtung in Wirkverbindung steht, wobei die elektronische Steuereinrichtung ein erfindungsgemäßes Verfahren durchführt. Von der elektronischen Steuereinrichtung kann auf einfache Weise anhand des Signals der Sensoreinrichtung der Betriebszustand erkannt werden, in dem sich die Bedienperson nicht auf der Fahrerstandplattform befindet, und das Flurförderzeug auf einen Mitgängerbetrieb umgeschaltet werden, in dem der Fahrantrieb mittels des Fahrgebers nur dann betätigt wird, wenn von der Bedienperson innerhalb des vorgegebenen Zeitraums mindestens zwei Betätigungen des Fahrgebers in eine der Bewegungsmöglichkeiten durchgeführt werden und somit an dem Fahrgeber die Freigabebetätigung erfolgt.

Bevorzugt ist die Lenkereinrichtung als Lenkrad und der Fahrgeber an einem Lenkkranz des Lenkrades drehbar angeordnet. Mit einem derartigen drehbar an dem Lenkkranz des Lenkrades angeordneten Fahrgeber kann von der Bedienperson im Mitfahrerbetrieb und im Mitgängerbetrieb in ergonomisch günstiger Weise der Fahrantrieb des Flurförderzeugs gesteuert werden.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes Flurförderzeug in einer perspektivischen Darstellung,
- Figur 2: das erfindungsgemäße Flurförderzeug im Mitgängerbetrieb durch eine Bedienperson,
- Figur 3: die Lenkereinrichtung des Flurförderzeugs der Figuren 1 und 2 in einer vergrößerten Darstellung und
- Figur 4: die Lenkereinrichtung in einer Draufsicht gemäß Pfeil PF der Figur 3.

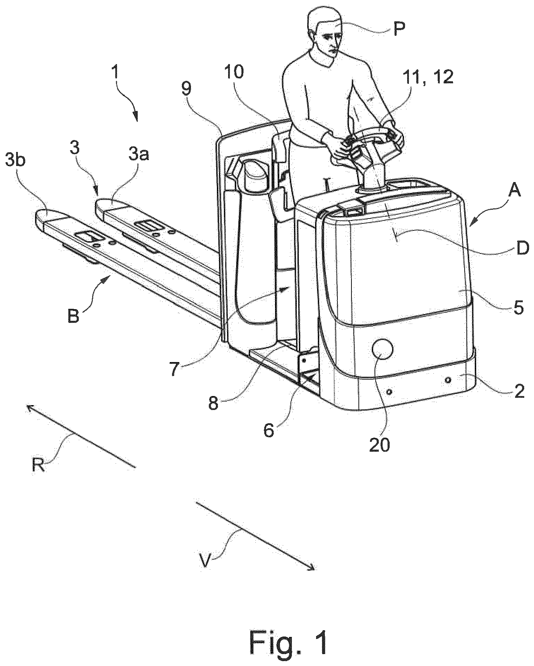

Die Figur 1 zeigt ein erfindungsgemäßes Flurförderzeug 1. Das Flurförderzeug 1 ist im dargestellten Ausführungsbeispiel als Kommissionierer oder Hubwagen ausgebildet.

Das Flurförderzeug 1 weist einen Antriebsteil A und einen relativ zum Antriebsteil A anhebbaren bzw. absenkbaren Lastteil B auf. Der Antriebsteil A weist als tragendes Bauteil einen Rahmen 2 auf. Der Lastteil B weist als tragendes Bauteil einen von zwei Lastgabeln 3a, 3b gebildeten Lastrahmen 3 auf. Die beiden Lastgabeln 3a, 3b sind in Fahrzeugquerrichtung voneinander beabstandet und mittels eines Hubantriebs relativ zu dem Antriebsteil A anhebbar und absenkbar.

An dem vorderen Bereich des Antriebsteils A ist unter einer Haube 5 ein Aggregateraum ausgebildet, in dem ein mittels eines Fahrantriebs elektrisch angetriebenes und mittels eines Lenkantriebs lenkbares Antriebsrad angeordnet ist, mit dem sich der Antriebsteil A auf einer Fahrbahn abstützt. Unter der Haube 5 sind in dem Aggregateraum weitere Aggregate angeordnet, beispielsweise eine Leistungselektronikeinheit und ein elektrischer Hubmotor zum Antrieb einer Hydraulikpumpe, mittels der eine Hubvorrichtung zum Anheben und Absenken des Lastrahmens 3 relativ zum Rahmen 2 versorgbar ist.

In Längsrichtung des Flurförderzeugs 1 benachbart zum Aggregateraum 4 ist am Antriebsteil A ein Batteriefach 6 zur Aufnahme einer Traktionsbatterie ausgebildet, der ein elektrisches Antriebssystem des Flurförderzeugs 1 mit elektrischer Energie versorgt.

In Längsrichtung des Flurförderzeugs 1 benachbart zum Batteriefach 6 ist am Antriebsteil A ein Fahrerarbeitsplatz 7 ausgebildet, der von einer Fahrerstandplattform 8 für eine stehende Bedienperson P ausgebildet ist, auf der die Bedienperson P steht.

Am hinteren Bereich des Antriebsteil A ist in Längsrichtung des Flurförderzeugs 1 benachbart zu dem Fahrerarbeitsplatz 7 eine vertikale Rückwand 9 angeordnet, an der der anhebbare und absenkbare Lastrahmen 3 vertikal geführt ist. An der vertikalen Rückwand 9 kann weiterhin in vertikaler Richtung oberhalb der Fahrerstandplattform 8 eine Rückenlehne 10 angeordnet sein, an der sich die auf der Fahrerstandplattform 8 stehende Bedienperson P abstützen kann.

Zur Bedienung des Flurförderzeugs 1 ist eine Lenkereinrichtung 11 vorgesehen, die im dargestellten Ausführungsbeispiel oberhalb des Antriebsteils A angeordnet ist.

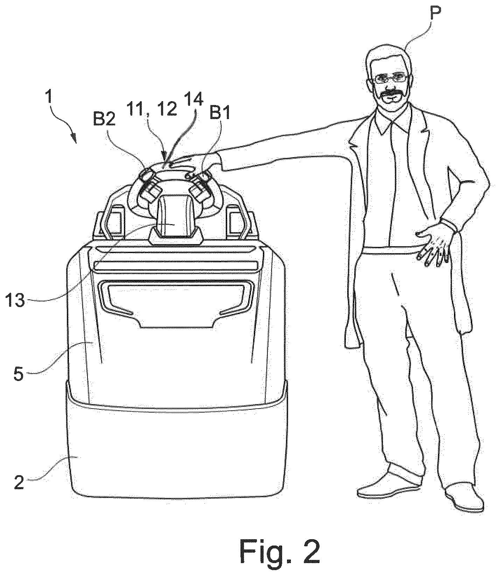

Die Lenkereinrichtung 11 ist - wie in den Figuren 2 bis 4 näher ersichtlich ist - im dargestellten Ausführungsbeispiel als Lenkrad 12 ausgebildet. Das Lenkrad 12 besteht aus einer Lenkerkonsole 13, die um eine Drehachse D drehbar an dem Flurförderzeugs 1 angeordnet ist, und einem mit der Lenkerkonsole 13 verbundenen Lenkkranz 14.

Mit dem Lenkrad 12 kann der Lenkantrieb, beispielsweise ein elektrischer Lenkantrieb, des Antriebsrades gesteuert werden, wobei durch eine Drehbewegung des Lenkrades 12 und der Lenkerkonsole 13 um die Drehachse D ein Lenksensor betätigt wird, der den Drehwinkel des Lenkrads 12 um die Drehachse D erfasst. Anhand des erfassten Drehwinkel des Lenkrads 12 wird der Lenkantrieb des Antriebsrades angesteuert.

Zur Steuerung des Fahrantriebs des Antriebsrades ist an der Lenkereinrichtung 11 mindestens ein Fahrgeber B1, B2 angeordnet ist, bei dessen Betätigung durch die Bedienperson P der Fahrantrieb betätigt wird. Der Fahrgeber B1, B2 weist jeweils eine erste Bewegungsmöglichkeit M1 für eine Vorwärtsfahrt des Flurförderzeugs, eine zweite Bewegungsmöglichkeit M2 für eine Rückwärtsfahrt des Flurförderzeugs und eine Neutralstellung auf, die zwischen den Bewegungsmöglichkeiten M1, M2 ausgebildet ist.

Im dargestellten Ausführungsbeispiel sind der mindestens eine Fahrgeber B1, B2 an dem Lenkkranz 14 des Lenkrades 12 drehbar angeordnet.

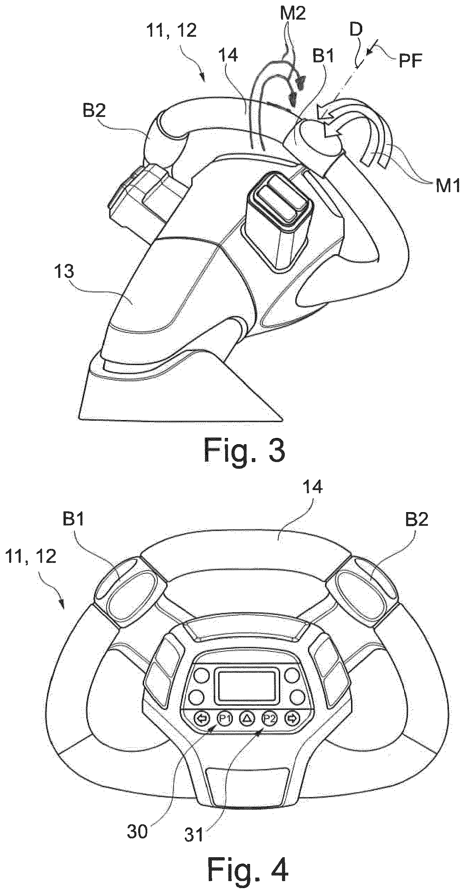

Im dargestellten Ausführungsbeispiel sind zwei Fahrgeber B1, B2 vorgesehen, wobei - wie insbesondere aus der Figur 4 ersichtlich ist - der Fahrgeber B1 an der linken Hälfte des Lenkkranzes 14 und der Fahrgeber B2 an der rechten Hälfte des Lenkkranzes 14 angeordnet ist.

Die Fahrgeber B1 bzw. B2 zur Steuerung des Fahrantriebs des Antriebsrades sind jeweils an dem Lenkkranz 14 angeordnet und als ringförmige, drehbare Fahrgeber B1, B2 ausgebildet. Die Drehachse der Fahrgeber B1, B2 ist derart ausgeführt, dass die Fahrgeber B1, B2 um den Lenkkranz 14 gedreht werden können, um die Bewegungsmöglichkeiten M1, M2 zu erzielen.

Das Flurförderzeug 1 ist mit einer elektronischen Steuereinrichtung 20 versehen, die mit dem Fahrgeber B1, B2, mit dem Fahrantrieb und mit einer das Vorhandensein oder Nichtvorhandensein der Bedienperson P auf der Fahrerstandplattform 8 erfassenden, nicht näher dargestellten Sensoreinrichtung, in Wirkverbindung steht. Die elektronische Steuereinrichtung 20 steht weiterhin mit dem Lenksensor und dem Lenkantrieb des Antriebsrades in Wirkverbindung.

In der Figur 1 befindet sich das Flurförderzeug 1 in einem Mitfahrerbetrieb, in dem sich die Bedienperson P auf der Fahrerstandplattform 8 befindet. Hierbei wird von der elektronischen Steuereinrichtung 20 mit der das Vorhandensein oder Nichtvorhandensein der Bedienperson P auf der Fahrerstandplattform 8 erfassenden Sensoreinrichtung erfasst, dass sich die Bedienperson P auf der Fahrerstandplattform 8 befindet und das Flurförderzeug 1 in einen Mitfahrerbetrieb versetzt. Im Zustand für den Mitfahrerbetrieb wird eine maximale Fahrgeschwindigkeit von bis zu 14 km/h und ein maximaler Lenkwinkel des Antriebsrades von +/-90° ermöglicht. Von der auf der Fahrerstandplattform 8 stehenden Bedienperson P kann im Mitfahrerbetrieb durch einmaliges Betätigen des Fahrgebers B1 bzw. B2 in die Bewegungsmöglichkeit M1 die Vorwärtsfahrt des Flurförderzeugs 1 mittels des Fahrantriebs und durch einmaliges Betätigen des Fahrgebers B1 bzw. B2 in die Bewegungsmöglichkeit M2 die Rückwärtsfahrt des Flurförderzeugs 1 mittels des Fahrantriebs gesteuert werden.

In der Figur 2 befindet sich das Flurförderzeug 1 in einem Mitgängerbetrieb, in dem sich die Bedienperson P nicht auf der Fahrerstandplattform 8 befindet, sondern seitlich neben dem Flurförderzeug 1. Hierbei wird von der elektronischen Steuereinrichtung 20 mit der das Vorhandensein oder Nichtvorhandensein der Bedienperson P auf der Fahrerstandplattform 8 erfassenden Sensoreinrichtung der Betriebszustand erfasst, dass sich die Bedienperson P nicht auf der Fahrerstandplattform 8 befindet und das Flurförderzeug 1 in einen Mitgängerbetrieb versetzt. Im Zustand für den Mitgängerbetrieb wird die maximale Fahrgeschwindigkeit gegenüber dem Zustand für den Mitfahrerbetrieb reduziert, beispielsweise auf eine maximale Fahrgeschwindigkeit im Bereich von 4-6 km/h. Im Zustand für den Mitgängerbetrieb wird weiterhin der maximale Lenkwinkel des Antriebsrades gegenüber dem Zustand für den Mitfahrerbetrieb reduziert und der maximale Lenkwinkel des Antriebsrades auf +/-10° begrenzt. Im Zustand für den Mitgängerbetrieb können weiterhin von der Steuereinrichtung 20 eine oder mehrere Signaleinrichtungen 30, 31, beispielsweise an der Lenkereinrichtung 11 angeordnete Signallampen, angesteuert werden, um den Zustand für den Mitgängerbetrieb der Bedienperson P anzuzeigen. Die Signallampen 30, 31 können hierzu in einem Blinkmodus betrieben werden.

In dem Betriebszustand, in dem sich die Bedienperson P nicht auf der Fahrerstandplattform 8 befindet, und somit im Zustand für den Mitgängerbetrieb kann erfindungsgemäß der Fahrantrieb mittels des Fahrgebers B1 bzw. B2 nur dann betätigt werden, wenn von der Bedienperson P innerhalb eines vorgegebenen Zeitraums mindestens zwei Betätigungen des Fahrgebers B1 bzw. B2 in eine der Bewegungsmöglichkeiten M1 bzw. M2 durchgeführt werden, wie in der Figur 3 verdeutlicht ist. Hierbei bildet die erste Betätigung des Fahrgebers B1 bzw. B2 in die Bewegungsmöglichkeiten M1 bzw. M2 eine Freigabebetätigung und mit der innerhalb der vorgegebenen Zeitspanne durchzuführenden zweiten Betätigung des Fahrgebers B1 bzw. B2 wird der Fahrantrieb entsprechend der Betätigung des Fahrgebers B1 bzw. B2 angesteuert.

Die zwei Betätigungen des Fahrgebers B1 bzw. B2 müssen bevorzugt in derselben Bewegungsmöglichkeit M1, M2 und somit in dieselbe Drehrichtung durchgeführt werden. Die zwei Betätigungen des Fahrgebers B1 bzw. B2 müssen bevorzugt an demselben Fahrgeber B1 bzw. B2 durchgeführt werden, also eine Doppelbetätigung an dem Fahrgeber B1 oder eine Doppelbetätigung an dem Fahrgeber B2 durchgeführt werden.

Bevorzugt muss nach der ersten Betätigung des Fahrgeber B1 bzw. B2 eine Rückkehr in die Neutralstellung erfolgen.

Der vorgegebene Zeitraum, innerhalb dem die beiden Betätigungen des Fahrgebers B1 bzw. B2 zu erfolgen haben, umfasst vorteilhafterweise eine Zeitspanne im Bereich von 0,1 bis 3 Sekunden, bevorzugt 0,5 bis 2 Sekunden.

Von der elektronischen Steuereinrichtung 20 wird hierbei ausgewertet, ob im Zustand für den Mitgängerbetrieb die entsprechenden zwei Betätigungen des Fahrgebers B1 bzw. B2 in eine der Bewegungsmöglichkeiten M1 bzw. M2 innerhalb des vorgegebenen Zeitraums durchgeführt werden.

Von der neben dem Flurförderzeug 1 befindlichen Bedienperson P kann somit im Mitgängerbetrieb durch eine Doppelbetätigung des Fahrgebers B1 bzw. B2 in die Bewegungsmöglichkeit M1 die Vorwärtsfahrt des Flurförderzeugs 1 mittels des Fahrantriebs und durch eine Doppelbetätigung des Fahrgebers B1 bzw. B2 in die Bewegungsmöglichkeit M2 die Rückwärtsfahrt des Flurförderzeugs 1 mittels des Fahrantriebs gesteuert werden.

Von der Bedienperson P kann hierbei im Mitgängerbetrieb der linke Fahrgeber B1 oder der rechte Fahrgeber B2 verwendet werden, je nachdem auf welcher Seite des Flurförderzeugs 1 sich die Bedienperson befindet.

Das erfindungsgemäße Verfahren und das erfindungsgemäße Flurförderzeug 1 arbeiten wie folgt:
Sofern das Flurförderzeug 1 eingeschaltet ist und die Bedienperson P die Fahrerstandplattform 8 verlässt, wird dies von der das Vorhandensein oder Nichtvorhandensein der Bedienperson P auf der Fahrerstandplattform 8 erfassenden Sensoreinrichtung erfasst, und das Flurförderzeug 1 in einen Zustand für den Mitgängerbetrieb versetzt. Im Zustand für den Mitgängerbetrieb werden automatisch die Signaleinrichtungen 30, 31 angesteuert, beispielsweise in einem Blinkmodus. Im Zustand für den Mitgängerbetrieb wird weiterhin die maximale Fahrgeschwindigkeit gegenüber dem Zustand für den Mitfahrerbetrieb reduziert, beispielsweise auf eine maximale Fahrgeschwindigkeit im Bereich von 4-6 km/h. Im Zustand für den Mitgängerbetrieb wird weiterhin der maximale Lenkwinkel des Antriebsrades gegenüber dem Zustand für den Mitfahrerbetrieb reduziert und der maximale Lenkwinkel des Antriebsrades auf +/-10° begrenzt.

Im Zustand für den Mitgängerbetrieb kann die neben dem Flurförderzeug 1 befindliche und somit die nicht auf der Fahrerstandplattform 8 befindliche Bedienperson P den Fahrantrieb des Flurförderzeugs 1 nur dann ansteuern und betätigen, wenn innerhalb eines vorgegebenen Zeitraums an dem Fahrgeber B1 zwei aufeinanderfolgende Betätigungen des Fahrgebers B1 in dieselbe Bewegungsmöglichkeit M1 bzw. M2 durchgeführt werden oder wenn innerhalb eines vorgegebenen Zeitraums an dem Fahrgeber B2 zwei aufeinanderfolgende Betätigungen des Fahrgebers B2 in dieselbe Bewegungsmöglichkeit M1 bzw. M2 durchgeführt werden.

Sofern die Bedienperson P anschließend die Fahrerstandplattform 8 wieder besteigt, bleibt der Mitgängerbetrieb solange aktiviert, bis die auf der Fahrerstandplattform 8 befindliche Bedienperson P den Fahrgeber B1 bzw. B2 erneut betätigt. Der Mitgängerbetrieb wird hierbei erst dann deaktiviert und das Flurförderzeug 1 in den Zustand für den Mitfahrerbetrieb versetzt, wenn sich der im Mitgängerbetrieb benutzte Fahrgeber B1 bzw. B2 oder beide Fahrgeber B1, B2 wieder in der Neutralstellung befinden und einer der Fahrgeber B1 bzw. B2 oder beide Fahrgeber B1, B2 aus der Neutralstellung in eine der Bewegungsmöglichkeiten M1 bzw. M2 betätigt werden und die Sensoreinrichtung eine auf der Fahrerstandplattform 8 befindliche Bedienperson P erfasst.

## Patentansprüche

1. Verfahren zum Betrieb eines Flurförderzeugs (1) mit einem Fahrantrieb, mit einem Fahrerarbeitsplatz (7), der von einer Fahrerstandplattform (8) für eine stehende Bedienperson (P) gebildet ist, und mit einer Lenkereinrichtung (11), an der mindestens ein Fahrgeber (B1; B2) angeordnet ist, bei dessen Betätigung durch die Bedienperson (P) der Fahrantrieb betätigt wird, wobei der Fahrgeber (B1; B2) eine erste Bewegungsmöglichkeit (M1) für eine Vorwärtsfahrt des Flurförderzeugs (1), eine zweite Bewegungsmöglichkeit (M2) für eine Rückwärtsfahrt des Flurförderzeugs (1) und eine Neutralstellung aufweist, **dadurch gekennzeichnet, dass** in einem Betriebszustand, in dem sich die Bedienperson (P) nicht auf der Fahrerstandplattform (8) befindet, der Fahrantrieb mittels des Fahrgebers (B1; B2) nur dann betätigt wird, wenn innerhalb eines vorgegebenen Zeitraums mindestens zwei Betätigungen des Fahrgebers (B1; B2) in eine der Bewegungsmöglichkeiten (M1; M2) durchgeführt werden.

2. Verfahren nach Anspruch 1, **dadurch gekennzeichnet, dass** die zwei Betätigungen des Fahrgebers (B1; B2) in derselben Bewegungsmöglichkeit (M1; M2) durchgeführt werden müssen.

3. Verfahren nach Anspruch 1 oder 2, **dadurch gekennzeichnet, dass** nach der ersten Betätigung des Fahrgeber (B1; B2) eine Rückkehr in die Neutralstellung erfolgen muss.

4. Verfahren nach einem der Ansprüche 1 bis 3, **dadurch gekennzeichnet, dass** der vorgegebene Zeitraum eine Zeitspanne im Bereich von 0,1 bis 3 Sekunden, bevorzugt 0,5 bis 2 Sekunden, umfasst.

5. Verfahren nach einem der Ansprüche 1 bis 4, **dadurch gekennzeichnet, dass** in dem Betriebszustand, in dem sich die Bedienperson (P) nicht auf der Fahrerstandplattform (8) befindet, die maximale Fahrgeschwindigkeit des Flurförderzeugs (1) gegenüber einem Mitfahrerbetrieb, in dem sich die Bedienperson (P) auf der Fahrerstandplattform (8) befindet, reduziert wird.

6. Verfahren nach einem der Ansprüche 1 bis 5, **dadurch gekennzeichnet, dass** in dem Betriebszustand, in dem sich die Bedienperson (P) nicht auf der Fahrerstandplattform (8) befindet, der maximale Lenkwinkel des Flurförderzeugs (1) gegenüber einem Mitfahrerbetrieb, in dem sich die Bedienperson (P) auf der Fahrerstandplattform (8) befindet, reduziert wird, insbesondere auf Lenkwinkel von +10° und -10° reduziert wird.

7. Verfahren nach einem der Ansprüche 1 bis 6, **dadurch gekennzeichnet, dass** der Betriebszustand, in dem sich die Bedienperson (P) nicht auf der Fahrerstandplattform (8) befindet, von einer Sensoreinrichtung erfasst wird, insbesondere einer das Vorhandensein oder Nichtvorhandensein der Bedienperson (P) auf der Fahrerstandplattform (8) erfassenden Sensoreinrichtung.

8. Verfahren nach einem der Ansprüche 1 bis 7, **dadurch gekennzeichnet, dass** der Betriebszustand, in dem sich die Bedienperson (P) nicht auf der Fahrerstandplattform (8) befindet, durch eine Signaleinrichtung (30; 31) angezeigt wird, insbesondere einer an der Lenkereinrichtung (11) angeordneten Signallampe (30, 31).

9. Flurförderzeug (1) mit einem Fahrantrieb, mit einem Fahrerarbeitsplatz (7), der von einer Fahrerstandplattform (8) für eine stehende Bedienperson (P) gebildet ist, und mit einer Lenkereinrichtung (11), an der mindestens ein Fahrgeber (B1; B2) angeordnet ist, bei dessen Betätigung durch die Bedienperson (P) der Fahrantrieb betätigbar ist, wobei der Fahrgeber (B1; B2) eine erste Bewegungsmöglichkeit (M1) für eine Vorwärtsfahrt des Flurförderzeugs (1), eine zweite Bewegungsmöglichkeit (M2) für eine Rückwärtsfahrt des Flurförderzeugs (1) und eine Neutralstellung aufweist, **dadurch gekennzeichnet, dass** eine elektronische Steuereinrichtung (20) vorgesehen ist, die mit dem Fahrgeber (B1; B2), mit dem Fahrantrieb und mit einer das Vorhandensein oder Nichtvorhandensein der Bedienperson (P) auf der Fahrerstandplattform (8) erfassenden Sensoreinrichtung in Wirkverbindung steht, wobei die elektronische Steuereinrichtung (20) ein Verfahren nach einem der Ansprüche 1 bis 8 durchführt.

10. Flurförderzeug nach Anspruch 9, **dadurch gekennzeichnet, dass** die Lenkereinrichtung (11) als Lenkrad (12) und der Fahrgeber (B1, B2) an einem Lenkkranz (14) des Lenkrades (12) drehbar angeordnet ist.

## Claims

1. Method for operating an industrial truck (1) with a traction drive, with a driver's workplace (7), which is formed by a driver's stand (8) for a standing operator (P), and with a steering device (11), on which at least one accelerator (B1; B2) is arranged, on the activation of which by the operator (P) the traction drive is activated, wherein the accelerator (B1; B2) has a first movement option (M1) for a forward travel of the industrial truck (1), a second movement option (M2) for a reverse travel of the industrial truck (1) and a neutral position, **characterized in that** in an operating state in which the operator (P) is not located on the driver's stand (8) the traction drive is activated by means of the accelerator (B1; B2) only when at least two activation operations of the accelerator (B1; B2) in one of the movement options (M1; M2) is carried out within a predefined time period.

2. Method according to Claim 1, **characterized in that** the two activation operations of the accelerator (B1; B2) have to be carried out in the same movement option (M1; M2).

3. Method according to Claim 1 or 2, **characterized in that** after the first activation of the accelerator (B1; B2), there must be a return into the neutral position.

4. Method according to one of Claims 1 to 3, **characterized in that** the predefined time period comprises a period of time in the region of 0.1 to 3 seconds, preferably 0.5 to 2 seconds.

5. Method according to one of Claims 1 to 4, **characterized in that** in the operating state in which the operator (P) is not located on the driver's stand (8), the maximum velocity of the industrial truck (1) is reduced with respect to a co-driver operating mode in which the operator (P) is located on the driver's stand (8).

6. Method according to one of Claims 1 to 5, **characterized in that** in the operating state in which the operator (P) is not located on the driver's stand (8), the maximum steering angle of the industrial truck (1) is reduced in comparison with the co-driver mode in which the operator (P) is located on the driver's stand (8), in particular is reduced to a steering angle +10° and -10°.

7. Method according to one of Claims 1 to 6, **characterized in that** the operating state in which the operator (P) is not located on the driver's stand (8) is sensed by a sensor device, in particular a sensor device which senses the presence or the absence of the operator (P) on the driver's stand (8).

8. Method according to one of Claims 1 to 7, **characterized in that** the operating state in which the operator (P) is not located on the driver's stand (8) is displayed by a signal device (30; 31), in particular a signal lamp (30, 31) which is arranged on the steering device (11).

9. Industrial truck (1) with a traction drive, with a driver's workstation (7) which is formed by a driver's platform (8) for a standing operator (P), and of a steering device (11) on which at least one accelerator (B1; B2) is arranged, on the activation of which the traction drive can be activated by the operator (P), wherein the accelerator (B1; B2) has a first movement option (M1) for forward travel of the industrial truck (1), a second movement option (M2) for reverse travel of the industrial truck (1), and a neutral position, **characterized in that** an electronic control device (20) is provided which is operatively connected to the accelerator (B1; B2), to the traction drive and to a sensor device which senses the presence or absence of the operator (P) on the driver's stand (8), wherein the electronic control device (20) carries out a method according to one of Claims 1 to 8.

10. Industrial truck according to Claim 9, **characterized in that** the steering device (11) as a steering wheel (12) and the accelerator (B1, B2) is rotatably arranged on a steering turnplate (14) of the steering wheel (12).

## Revendications

1. Procédé d'exploitation d'un chariot de manutention (1) comprenant un entraînement de déplacement, comprenant un poste de conduite (7), qui est formé par une plateforme de conduite (8) pour un opérateur debout (P), et comprenant un appareil de direction (11), sur lequel au moins un manipulateur de déplacement (B1 ; B2) est agencé, lors de l'actionnement par l'opérateur (P) duquel l'entraînement de déplacement est actionné, le manipulateur de déplacement (B1 ; B2) comprenant une première possibilité de mouvement (M1) pour une marche avant du chariot de manutention (1), une deuxième possibilité de mouvement (M2) pour une marche arrière du chariot de manutention (1) et une position neutre, **caractérisé en ce que,** dans un état d'exploitation dans lequel l'opérateur (P) ne se trouve pas sur la plateforme de conduite (8), l'entraînement de déplacement n'est actionné au moyen du manipulateur de déplacement (B1 ; B2) que lorsqu'au moins deux actionnements du manipulateur de déplacement (B1 ; B2) dans une des possibilités de mouvement (M1 ; M2) sont réalisés pendant une période de temps prédéterminée.

2. Procédé selon la revendication 1, **caractérisé en ce que** les deux actionnements du manipulateur de déplacement (B1 ; B2) doivent être réalisés dans la même possibilité de mouvement (M1 ; M2).

3. Procédé selon la revendication 1 ou 2, **caractérisé en ce qu'**après le premier actionnement du manipulateur de déplacement (B1 ; B2), un retour dans la position neutre doit avoir lieu.

4. Procédé selon l'une quelconque des revendications 1 à 3, **caractérisé en ce que** la période de temps prédéterminée comprend une durée dans la plage allant de 0,1 à 3 secondes, de préférence de 0,5 à 2 secondes.

5. Procédé selon l'une quelconque des revendications 1 à 4, **caractérisé en ce que**, dans l'état d'exploitation dans lequel l'opérateur (P) ne se trouve pas sur la plateforme de conduite (8), la vitesse de déplacement maximale du chariot de manutention (1) est réduite par rapport à une exploitation avec passager, dans laquelle l'opérateur (P) se trouve sur la plateforme de conduite (8).

6. Procédé selon l'une quelconque des revendications 1 à 5, **caractérisé en ce que**, dans l'état d'exploitation dans lequel l'opérateur (P) ne se trouve pas sur la plateforme de conduite (8), l'angle de direction maximal du chariot de manutention (1) est réduit par raport à une exploitation avec passager, dans laquelle l'opérateur (P) se trouve sur la plateforme de conduite (8), notamment à des angles de direction de +10° et -10°.

7. Procédé selon l'une quelconque des revendications 1 à 6, **caractérisé en ce que** l'état d'exploitation dans lequel l'opérateur (P) ne se trouve pas sur la plateforme de conduite (8) est déterminé par un appareil de détection, notamment un appareil de détection déterminant la présence ou l'absence de l'opérateur (P) sur la plateforme de conduite (8).

8. Procédé selon l'une quelconque des revendications 1 à 7, **caractérisé en ce que** l'état d'exploitation dans lequel l'opérateur (P) ne se trouve pas sur la plateforme de conduite (8) est indiqué par un appareil de signalisation (30 ; 31), notamment une lampe de signalisation (30, 31) agencée sur l'appareil de direction (11).

9. Chariot de manutention (1) comprenant un entraînement de déplacement, comprenant un poste de conduite (7), qui est formé par une plateforme de conduite (8) pour un opérateur debout (P), et comprenant un appareil de direction (11), sur lequel au moins un manipulateur de déplacement (B1 ; B2) est agencé, lors de l'actionnement par l'opérateur (P) duquel l'entraînement de déplacement peut être actionné actionné, le manipulateur de déplacement (B1 ; B2) comprenant une première possibilité de mouvement (M1) pour une marche avant du chariot de manutention (1), une deuxième possibilité de mouvement (M2) pour une marche arrière du chariot de manutention (1) et une position neutre, **caractérisé en ce qu'un** appareil de commande électronique (20) est prévu, qui est en liaison active avec le manipulateur de déplacement (B1 ; B2), avec l'entraînement de déplacement et avec un appareil de détection déterminant la présence ou l'absence de l'opérateur (P) sur la plateforme de conduite (8), l'appareil de commande électronique (20) réalisant un procédé selon l'une quelconque des revendications 1 à 8.

10. Chariot de manutention selon la revendication 9, **caractérisé en ce que** l'appareil de direction (11) sous la forme d'un volant (12) et le manipulateur de déplacement (B1, B2) est agencé rotatif sur une couronne de direction (14) du volant (12).
